# FASCICULE DE BREVET EUROPEEN

(11) **EP 4 294 709 B1**
(45) Date de publication et mention de la délivrance du brevet: **12.08.2026**
(21) Numéro de dépôt: 22709347.3
(22) Date de dépôt: 18.01.2022
(51) Int. Cl.: B62D 65/02, B62D 25/08, B62D 29/00

(54) **MONTAGE DE TRAVERSE AVANT POUR CRASH TEST « SMALL OVERLAP »**
FRONTQUERTRÄGERBAUGRUPPE FÜR DEN FRONTAUFPRALLTEST MIT GERINGER ÜBERLAPPUNG
FRONT CROSSMEMBER ASSEMBLY FOR THE SMALL OVERLAP FRONTAL CRASH TEST

(30) Priorité: 18.02.2021 FR 2101550
(43) Date de publication de la demande: 27.12.2023
(73) Titulaire: Stellantis Auto SAS, 78300 Poissy (FR)
(72) Inventeur: PERON, Rodolphe, 95220 HERBLAY (FR); GOURVENNEC, Thibault, 91210 DRAVEIL (FR)
(74) Mandataire: BCIP
(86) Numéro de dépôt international: PCT/FR2022/050096
(87) Numéro de publication internationale: WO 2022/175610

(56) Documents cités:
- FR-A1- 2 870 197
- FR-A1- 3 094 328

## Description

### Domaine technique

L'invention a trait au domaine des véhicules automobiles, en particulier au domaine des structures de véhicule automobile et de leur capacité à subir avec succès des tests d'impact, notamment d'impact frontal.

### Technique antérieure

Il existe une série de tests d'impact ou « crash tests » avec des procédures normalisées et reconnues, permettant d'évaluer les véhicules automobiles quant à leur sécurité passive. Il existe notamment des tests d'impact spécifiques au marché américain désignés « driver side small overlap front test » et « passenger side small overlap front test », élaborés par le « Insurance Institute for Highway Safety » (IIHS). Le IIHS est une organisation scientifique et éducative indépendante à but non lucratif qui se consacre à la réduction des pertes par décès, blessures et dommages matériels, des accidents de véhicules. Ce test est conçu pour reproduire ce qui se passe lorsque le coin avant gauche d'un véhicule entre en collision avec un autre véhicule ou un objet comme un arbre ou un poteau. Ce test de collision est un défi pour certaines conceptions de ceintures de sécurité et de coussins gonflables, car les occupants se déplacent à la fois vers l'avant et vers le côté du véhicule. Dans le test frontal de petit chevauchement côté conducteur, un véhicule se déplace à 64km/h vers une barrière rigide de 150 cm de haut. Un mannequin représentant un homme de taille moyenne est placé sur le siège du conducteur. Vingt-cinq pour cent de la largeur totale du véhicule heurte la barrière du côté conducteur. La plupart des voitures modernes ont des cages de sécurité encapsulant l'habitacle et conçues pour résister aux collisions frontales et aux collisions frontales à chevauchement modéré avec peu de déformation. Dans le même temps, les zones d'écrasement aident à gérer l'énergie de collision pour réduire les forces sur l'habitacle. Les principales structures de la zone d'écrasement sont concentrées dans la moitié médiane de l'extrémité avant. Lorsqu'un accident implique ces structures, l'habitacle est protégé contre les intrusions et les coussins gonflables avant et les ceintures de sécurité peuvent retenir et protéger efficacement les occupants. Les collisions frontales à petit chevauchement affectent principalement les bords extérieurs d'un véhicule, qui ne sont pas bien protégés par les structures de la zone d'écrasement. Les forces de collision vont directement dans la roue avant, le système de suspension et le tablier avant. Il n'est pas rare que la roue soit forcée vers l'arrière dans le plancher, contribuant à encore plus d'intrusion dans l'habitacle et entraînant de graves blessures aux jambes et aux pieds. Pour fournir une protection efficace dans les collisions avec petit chevauchement, la cage de sécurité doit résister aux forces de collision qui ne sont pas tempérées par les structures de la zone d'écrasement. A cet effet, il est connu de prévoir une traverse structurelle située au niveau de la façade avant et fixée directement aux extrémités des brancards avant. Cette traverse est structurelle en ce qu'elle présente une certaine rigidité et massivité, et par conséquent un poids important, par exemple d'au moins 10kg. Une telle massivité n'est pas sans poser des problèmes d'ergonomie au travail lors de son montage.

Le document de brevet publié FR 3 031 952 A1 divulgue un module de façade avant comprenant une traverse de façade avant et deux montants latéraux configurés pour s'assembler facilement avec ladite traverse de façade avant, en l'occurrence par un système de liaison par insertion. Ce module de façade avant présente ainsi un volume réduit à l'état non-assemblé et peut être aisément assemblé tout en présentant une rigidité suffisante. Ce module de façade se limite cependant à supporter divers éléments comme le radiateur de refroidissement du moteur, les projecteurs et la serrure de capot avant. Il n'assure pas une liaison rigide entre les deux brancards comme la traverse structurelle susmentionnée. Ce document manque par conséquent d'apporter une solution au problème susmentionné.

Le document FR 2 870 197 A1 divulgue un module frontal de véhicule, qui comprend une traverse qui, une fois en place, peut gêner l'accès à la partie avant du compartiment moteur qui, pour résoudre ce problème, propose un système de montage temporaire avec des crochets qui s'étendent depuis la face arrière de la traverse permettant de s'accrocher aux longerons du véhicule pour suspendre la traverse dans une "position intermédiaire" inclinée vers l'avant. Cette position dégage l'accès au compartiment moteur, facilitant ainsi l'assemblage d'autres composants ou les interventions de maintenance. Ce document manque aussi par conséquent d'apporter une solution au problème susmentionné.

### Exposé de l'invention

L'invention a pour objectif de pallier au moins un des inconvénients de l'état de la technique susmentionné. Plus spécifiquement, l'invention a pour objectif de faciliter le montage d'une traverse structurelle à l'avant d'un véhicule automobile, la traverse en question étant destinée à être fixée aux deux profilés longitudinaux ou brancards de la structure du véhicule.

L'invention a pour objet un véhicule automobile comprenant deux profilés longitudinaux s'étendant vers l'avant depuis une partie habitacle du véhicule automobile ; une traverse de façade avant ; remarquable en ce que la traverse de façade avant comprend des moyens de soutien provisoire, lors du montage, d'une traverse structurelle destinée à relier les deux profilés longitudinaux.

Selon un mode avantageux de l'invention, les moyens de soutien provisoire comprennent au moins deux crochets faisant saillie vers l'avant.

Selon un mode avantageux de l'invention, la traverse de façade avant est en matériau plastique, les moyens de soutien provisoire étant intégralement formés avec ladite traverse de façade avant.

Selon un mode avantageux de l'invention, les moyens de soutien provisoire sont configurés pour soutenir une portion centrale de la traverse structurelle. Avantageusement, la portion centrale de la traverse structurelle est transversale et rectiligne.

Selon l'invention, le véhicule automobile comprend la traverse structurelle, ladite traverse structurelle présentant une forme en U inversé et comprenant une portion centrale en vis-à-vis de la face avant de la traverse de façade avant ; et deux portions latérales s'étendant vers le bas depuis deux extrémités de la portion centrale et fixées aux deux profilés longitudinaux, respectivement.

Selon un mode avantageux de l'invention, chacune des deux portions latérales de la traverse structurelle comprend une platine fixée par vissage à une platine du profilé longitudinal correspondant.

Selon un mode avantageux de l'invention, chacune des deux portions latérales forme un corps creux avec une section transversale diminuant vers la portion centrale de la traverse structurelle.

Selon un mode avantageux de l'invention, les au moins deux crochets sont configurés pour s'étendre sous et devant la portion centrale de la traverse structurelle ou pour s'insérer dans des ouvertures formées dans une face inférieure de ladite portion centrale.

Les au moins deux crochets forment avantageusement une direction de soutien parallèle à la direction de la portion principale longitudinale. Les au moins deux crochets sont avantageusement configurés pour supporter une portion rectiligne d'une traverse structurelle. Les au moins deux crochets sont avantageusement configurés pour supporter une charge totale d'au moins 10kg.

L'invention a également pour objet un procédé d'assemblage dudit véhicule automobile, comprenant les étapes suivantes: (a) montage d'une traverse de façade avant ; (b) montage d'une traverse structurelle à l'avant de la traverse de façade avant ; remarquable en ce que le véhicule est selon l'invention ; et l'étape (b) comprend un positionnement provisoire de la traverse structurelle sur les moyens de soutien provisoire de la traverse de façade avant, et ensuite une fixation de la traverse structurelle aux deux profilés longitudinaux.

Les mesures de l'invention sont intéressantes en ce qu'elles facilitent le montage de la traverse structurelle, en assurant un soutien provisoire en position de montage. Le montage de la traverse structurelle est en effet postérieur, temporellement, au montage de la traverse de façade avant, signifiant que cette dernière est présente au moment du montage de la traverse structurelle. Aussi, la traverse structurelle est positionnée à l'avant de la traverse de façade avant. L'invention tire ainsi profit de la traverse de façade avant pour faciliter le montage d'une pièce potentiellement lourde et qui par ailleurs, ne peut être posée sur aucune surface d'appui avoisinante, outre les moyens de soutien provisoire selon l'invention. Le positionnement des portions latérales de la traverse structurelle en face des extrémités avant des profilés longitudinaux requiert un positionnement précis dans un plan vertical transversal, c'est-à-dire suivant les axes y et z dans un repère orthonormé où l'axe x est un axe longitudinal, l'axe y un axe transversal horizontal et l'axe z un axe vertical, alors le positionnement suivant l'axe x peut être finalisé lors de la fixation, par exemple lors de la fixation de caissons déformables (« crashboxes) dans le prolongement, vers l'avant, des profilés longitudinaux.

### Brève description des dessins

[Fig 1] est une représentation en perspective de la partie avant de la structure d'un véhicule automobile conforme à l'invention ;
[Fig 2] est une vue de détail de la façade avant du véhicule automobile de la figure 1 ;
[Fig 3] représente une traverse de façade avant permettant de soutenir provisoirement, durant le montage, la traverse structurelle, selon un premier mode de réalisation de l'invention ;
[Fig 4] représente une traverse de façade avant permettant de soutenir provisoirement, durant le montage, la traverse structurelle, selon un deuxième mode de réalisation de l'invention.

### Description détaillée

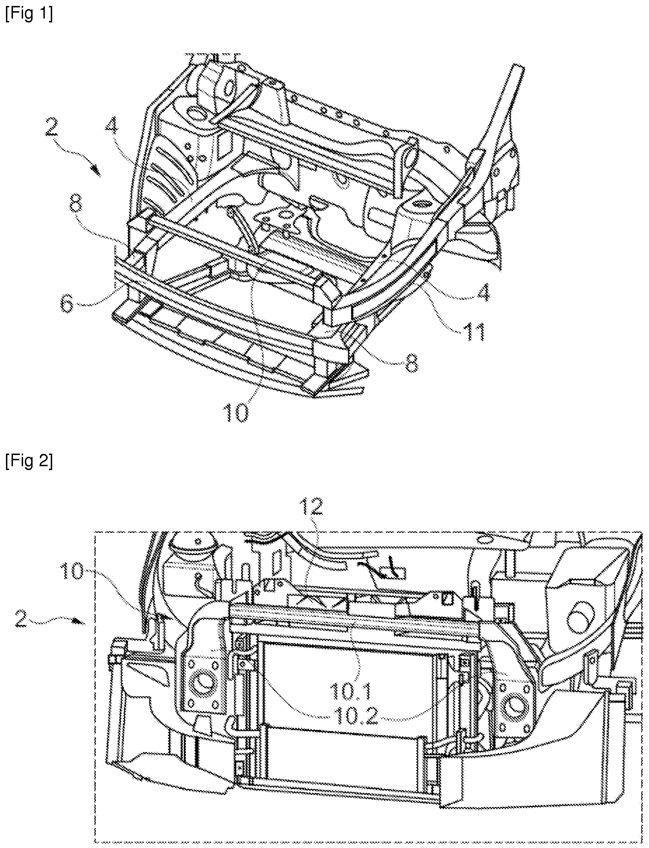

La figure 1 illustre la patrie avant d'une structure de véhicule automobile conforme à l'invention.

Le véhicule automobile 2 présente à l'avant deux profilés longitudinaux 4 s'étendant vers l'avant depuis la partie habitacle du véhicule automobile, sous le plancher dudit véhicule, ces profilés longitudinaux étant couramment désignés brancards, par analogie aux bras d'une civière. Une traverse de pare-chocs avant 6 est fixée aux extrémités avant des profilés longitudinaux 4 via deux caissons déformables en compression 8, couramment désigné par l'expression anglo-saxonne « crashboxes ».

Le véhicule automobile 2 présente la particularité de comporter une traverse structurelle 10 reliant mécaniquement les extrémités des deux profilés longitudinaux 4. La traverse structurelle 10 présente une forme générale en U inversé, avec une portion centrale formant un profilé transversal et deux portions latérales rigidement liées à la portion centrale et fixées aux extrémités des deux profilés longitudinaux 4. Chacune des deux portions latérales peut former un corps creux avec une section transversale diminuant vers la portion centrale. Cette traverse est structurelle en ce qu'elle est massive et réalise un renforcement substantiel de la structure du véhicule automobile. Ce renforcement est destiné à rendre le véhicule automobile compatible avec le test de collision avec petit chevauchement élaboré pour le marché américain et mentionné précédemment dans la partie 'Technique antérieure'. Dans ce test de collision le chevauchement entre l'obstacle et la face avant du véhicule est faible au point que l'obstacle évite le profilé longitudinal ou brancard situé du côté de l'obstacle. Ce sont donc alors la traverse de pare-chocs 8, la roue avant (non représentée) et le renfort avant 11 qui vont travailler pour absorber le choc. A cet effet, le profilé transversal 4 ou brancard correspondant a tendance à s'effacer, c'est-à-dire à se déformer latéralement vers le centre du véhicule. La traverse structurelle 10 contient, à tout le moins limite, cette tendance et permet au véhicule automobile de présenter une note satisfaisante au test susmentionné.

La figure 2 est une vue plus détaillée de la façade avant du véhicule automobile de la figure 1. Sur cette vue, la traverse de pare-chocs avant et les caissons déformables illustrés à la figure 1 sont absents. La traverse structurelle 10 y est bien visible, en particulier la portion centrale 10.1 généralement rectiligne et transversale, et les deux portions latérales 10.2 s'étendant vers le bas depuis les extrémités de la portion centrale 10.1 et fixées aux extrémités avant des deux profilés longitudinaux (non visibles). On peut observer à la figure 2 la présence d'une traverse de façade avant 12 directement à l'arrière de la traverse structurelle 10. La traverse de façade avant 12 est fixée à ses extrémités aux doublures d'aile (non représentées) et sert de support notamment au radiateur de refroidissement du moteur thermique et/ou à l'échangeur thermique du système de climatisation, aux projecteurs avant et/ou à la serrure de capot avant, de manière connue en soi.

Conformément à l'invention, la traverse de façade avant 12 est utilisée comme soutien provisoire de la traverse structurelle 10 lors de son montage sur le véhicule automobile. En référence à la description de la traverse structurelle 10 faite en relation avec la figure 1, celle-ci présente une certaine massivité, typiquement un poids d'au moins 10kg. Il est donc particulièrement utile de pouvoir la soutenir provisoirement, en position de montage. Des moyens de soutien provisoire sont prévus sur la traverse de façade avant 12, avantageusement sur la face avant de la traverse de façade avant 12, conçus pour supporter la portion centrale 10.1 de la traverse structurelle 10. Les portions latérales 10.2 de la traverse structurelle 10 peuvent ainsi être fixées aux extrémités avant des profilés longitudinaux.

On observe à la figure 2 que chacune des portions latérales 10.2 comporte une platine fixée contre une platine (non visible) à l'extrémité avant du profilé longitudinal correspondant, au moyen de vis de fixation au travers des orifices de fixation. Des caissons déformables, tels qu'illustrés à la figure 1, peuvent ensuite être fixés contre les portions latérales 10.2 dans le prolongement des profilés longitudinaux, en vue de supporter la traverse de pare-chocs avant, telle qu'illustrée à la figure 1.

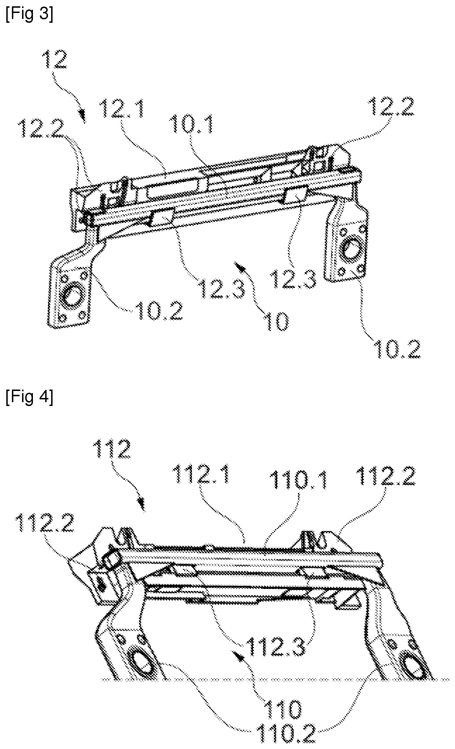

La figure 3 illustre une traverse de façade avant permettant de soutenir provisoirement, durant le montage, la traverse structurelle, selon un premier mode de réalisation de l'invention.

La traverse de façade avant 12 comprend une portion principale longitudinale 12.1 avec deux extrémités opposées, et des moyens de fixation 12.2 aux extrémités opposées en question. Ces moyens de fixation 12.2 sont en l'occurrence des orifices prévus pour assurer une fixation aux doublures d'aile avant et aux ailes avant. La traverse de façade avant 12 comprend, en outre, deux crochets 12.3 faisant saillie vers l'avant et configurés pour soutenir la traverse structurelle 10. Les deux crochets 12.3 sont avantageusement implantés sur la face avant de la portion principale longitudinale 12.1 de la traverse de façade avant 12. En l'occurrence, chacun des deux crochets 12.3 présente une section longitudinale en forme de L, c'est-à-dire avec une portion généralement horizontale faisant saillie, vers l'avant, de la traverse de façade avant 12 et supportant une face inférieure de la portion centrale 10.1 de la traverse structurelle 10, et une portion généralement verticale s'étendant vers le haut à l'avant de la portion centrale 10.1 de la traverse structurelle 10.

La figure 4 illustre une traverse de façade avant permettant de soutenir provisoirement, durant le montage, la traverse structurelle, selon un deuxième mode de réalisation de l'invention. Les numéros de référence du premier mode sont utilisés pour désigner les éléments identiques ou correspondants du deuxième mode, ces numéros étant toutefois majorés de 100. Il est aussi fait référence à la description de ces éléments dans le premier mode de réalisation.

Le deuxième mode de réalisation se distingue du premier mode de réalisation en ce que les crochets 112.3 ne s'étendent pas essentiellement verticalement devant la portion centrale 110.1 de la traverse structurelle 110 mais bien dans des orifices pratiqués dans ladite portion centrale 110.1. Ces orifices sont pratiqués dans une face inférieure de la portion centrale 110.1 de la traverse structurelle 110.

Cette configuration des moyens de soutien provisoire de la traverse structurelle est intéressante en ce que ces moyens, à savoir les crochets 112.3, ne s'étendent pas à l'avant de la traverse structurelle 110, en particulier sa portion centrale 110.1, de manière à ne pas interférer avec les éléments du véhicule automobile situés à l'avant de la traverse structurelle 110 et susceptibles de se déplacer vers la traverse en question.

On peut observer que les traverses structurelles 10 et 110 illustrées aux figures 3 et 4 sont quelque peu différentes de celle illustrée aux figures 1 et 2. Cela ne change toutefois rien au principe de l'invention et montre par ailleurs que l'invention est compatible avec différentes exécutions de traverse structurelle.

Les deux modes de réalisation des moyens de soutien provisoire, lors du montage, de la traverse structurelle, décrits ci-avant, illustrent l'invention de manière non limitative, étant entendu que d'autres modes de réalisation sont envisageables. A titre d'exemple, ces moyens de soutien provisoire peuvent comprendre un seul crochet ou encore plus de deux crochets. Ils peuvent également être amovibles, c'est-à-dire aptes à être retirés après montage de la traverse structurelle et/ou mis en place spécifiquement avant le montage de la traverse structurelle.

De manière générale, la traverse de façade avant peut être réalisée en matière plastique, par injection. A cet effet, les moyens de soutien provisoire sont avantageusement réalisés d'un seul tenant avec la traverse de façade avant. Ils peuvent cependant, alternativement, être rapportés sur la traverse de façade avant.

L'invention est toutefois limitée à la portée des revendications annexées.

## Revendications

1. Véhicule automobile (2) comprenant :
- deux profilés longitudinaux (4) s'étendant vers l'avant depuis une partie habitacle du véhicule automobile ; et
- une traverse de façade avant (12), la traverse de façade avant (12 ; 112) comprenant des moyens de soutien provisoire (12.3 ; 112.3), lors du montage, d'une traverse structurelle (10 ; 110) destinée à relier les deux profilés longitudinaux (4),
**caractérisé en ce que** le véhicule automobile comprend la traverse structurelle (10 ; 110), ladite traverse structurelle présentant une forme en U inversé et comprenant :
- une portion centrale (10.1 ; 110.1) en vis-à-vis de la traverse de façade avant (12 ; 112) ;
- deux portions latérales (10.2 ; 110.2) s'étendant vers le bas depuis deux extrémités de la portion central (10.1 ; 110.1) et fixées aux deux profilés longitudinaux (4), respectivement.

2. Véhicule automobile (2) selon la revendication 1,
**caractérisé en ce que** les moyens de soutien provisoire comprennent au moins deux crochets (12.3 ; 112.3) faisant saillie vers l'avant.

3. Véhicule automobile (2) selon l'une des revendications 1 et 2, **caractérisé en ce que** la traverse de façade avant (12 ; 112) est en matériau plastique, les moyens de soutien provisoire (12.3 ; 112.3) étant intégralement formés avec ladite traverse de façade avant.

4. Véhicule automobile (2) selon l'une des revendications 1 à 3, **caractérisé en ce que** les moyens de soutien provisoire (12.3 ; 112.3) sont configurés pour soutenir une portion centrale (10.1 ; 110.1) de la traverse structurelle (10 ; 110).

5. Véhicule automobile (2) selon l'une quelconque des revendications précédentes, **caractérisé en ce que** chacune des deux portions latérales (10.2 ; 110.2) de la traverse structurelle (10 ; 110) comprend une platine fixée par vissage à une platine du profilé longitudinal correspondant (4).

6. Véhicule automobile (2) selon l'une quelconque des revendications précédentes, **caractérisé en ce que** chacune des deux portions latérales (10.2 ; 110.2) forme un corps creux avec une section transversale diminuant vers la portion centrale (10.1 ; 110.1) de la traverse structurelle (10 ; 110).

7. Véhicule automobile (2) selon la revendication 2 ou selon l'une quelconque des revendication 3 à 6 prisent dans la dépendance de la revendication 2, **caractérisé en ce que** les au moins deux crochets (12.3 ; 112.3) sont configurés pour s'étendre sous et devant la portion centrale (10.1) de la traverse structurelle (10 ; 110) pour s'insérer dans des ouvertures formées dans une face inférieure de ladite portion centrale (110.1).

8. Procédé d'assemblage d'un véhicule automobile (2),
comprenant les étapes suivantes:
(a) montage d'une traverse de façade avant (12 ; 112) ;
(b) montage d'une traverse structurelle (10 ; 110) à l'avant de la traverse de façade avant (12 ; 112) ;
**caractérisé en ce que**
le véhicule automobile (2) est selon l'une des revendications 1 à 7 ; et
l'étape (b) comprend un positionnement provisoire de la traverse structurelle (10.1 ; 110.1) sur les moyens de soutien provisoire (12.3 ; 112.3) de la traverse de façade avant (12 ; 112), et ensuite une fixation de la traverse structurelle (10 ; 110) aux deux profilés longitudinaux (4).

## Patentansprüche

1. Kraftfahrzeug (2) mit :
- zwei Längsprofile (4), die sich von einem Teil des Fahrgastraums des Kraftfahrzeugs nach vorne erstrecken; und
- einem vorderen Fassadenquerträger (12), wobei der vordere Fassadenquerträger (12; 112) provisorische Stützmittel (12.3; 112.3) für einen Strukturquerträger (10; 110) zur Verbindung der beiden Längsprofile (4) bei der Montage aufweist,
Das Kraftfahrzeug umfasst die strukturelle Traverse (10; 110), wobei die strukturelle Traverse eine umgekehrte U-Form aufweist und umfasst:
- einem Mittelteil (10.1; 110.1) gegenüber der vorderen Fassadenstange (12; 112);
- zwei seitliche Abschnitte (10.2; 110.2), die sich von zwei Enden des mittleren Abschnitts (10.1; 110.1) nach unten erstrecken und an den beiden Längsprofilen (4) befestigt sind.

2. Kraftfahrzeug (2) nach Patentanspruch 1, **dadurch gekennzeichnet, dass** die Mittel zur provisorischen Stützung wenigstens zwei Haken (12.3; 112.3) umfassen, die nach vorne vorstehen.

3. Kraftfahrzeug (2) nach einem der Ansprüche 1 und 2, **dadurch gekennzeichnet, dass** der vordere Fassadenquerträger (12; 112) aus Kunststoff besteht, wobei die provisorischen Stützmittel (12.3; 112.3) einstückig mit dem vorderen Fassadenquerträger ausgebildet sind.

4. Kraftfahrzeug (2) nach einem der Ansprüche 1 bis 3, **dadurch gekennzeichnet, dass** die provisorischen Stützmittel (12.3; 112.3) so konfiguriert sind, dass sie einen zentralen Abschnitt (10.1; 110.1) des strukturellen Querträgers (10; 110) stützen.

5. Kraftfahrzeug (2) nach einem der vorhergehenden Ansprüche, **dadurch gekennzeichnet, dass** jeder der beiden Seitenabschnitte (10.2; 110.2) des strukturellen Querträgers (10; 110) eine Platte umfasst, die an einer Platte des entsprechenden Längsprofils (4) verschraubt ist.

6. Kraftfahrzeug (2) nach einem der vorhergehenden Ansprüche, **dadurch gekennzeichnet, dass** jeder der beiden Seitenabschnitte (10.2; 110.2) einen Hohlkörper bildet, dessen Querschnitt sich zum Mittelabschnitt (10.1; 110.1) des strukturellen Querträgers (10; 110) hin verjüngt.

7. Kraftfahrzeug (2) nach Anspruch 2 oder nach einem der Ansprüche 3 bis 6 in Abhängigkeit von Anspruch 2, **dadurch gekennzeichnet, dass** die wenigstens zwei Haken (12.3; 112.3) so konfiguriert sind, dass sie sich unter und vor dem mittleren Abschnitt (10.1) des strukturellen Querträgers (10; 110) erstrecken, um in Öffnungen einzugreifen, die in einer Unterseite des mittleren Abschnitts (110.1) ausgebildet sind.

8. Verfahren zum Zusammenbau eines Kraftfahrzeugs (2), das die folgenden Schritte umfasst:
(a) Montage einer vorderen Fassadenschwelle (12; 112);
(b) Montage eines strukturellen Querträgers (10; 110) vor dem vorderen Fassadenquerträger (12; 112); **dadurch gekennzeichnet, dass** das Kraftfahrzeug (2) nach einem der Ansprüche 1 bis 7 ist; und Schritt (b) eine provisorische Positionierung des strukturellen Querträgers (10.1; 110.1) auf den provisorischen Stützmitteln (12.3; 112.3) des vorderen Fassadenquerträgers (12; 112) und anschließend eine Befestigung des strukturellen Querträgers (10) umfasst; 110) an den beiden Längsprofilen (4).

## Claims

1. Motor vehicle (2) comprising:
- two longitudinal sections (4) extending forwards from a passenger compartment portion of the motor vehicle; and
- a front cross-member (12), the front cross-member (12; 112) having means (12.3; 112.3) for temporarily supporting, during assembly line, a structural cross-member (10; 110) for connecting the two longitudinal sections (4),
**characterised in that** the motor vehicle comprises the structural cross-member (10; 110), said structural cross-member having an inverted U-shape and comprising:
- a central portion (10.1; 110.1) facing the front cross-member (12; 112);
- two lateral portions (10.2; 110.2) extending downwards from two ends of the central portion (10.1; 110.1) and fixed to the two longitudinal profiles (4), respectively.

2. Motor vehicle (2) according to Claim 1, **characterised in that** the temporary support means comprise at least two hooks (12.3; 112.3) projecting forwards.

3. Motor vehicle (2) according to one of Claims 1 and 2, **characterised in that** the front cross-member (12; 112) is made of plastic material, the temporary support means (12.3; 112.3) being integrally formed with said front cross-member.

4. Motor vehicle (2) according to one of Claims 1 to 3, **characterised in that** the temporary support means (12.3; 112.3) are configured to support a central portion (10.1; 110.1) of the structural cross-member (10; 110).

5. A motor vehicle (2) according to any one of the previous claims, wherein each of the two lateral portions (10.2; 110.2) of the structural cross-member (10; 110) comprises a plate screwed to a plate of the corresponding longitudinal section (4).

6. A motor vehicle (2) according to any one of the previous claims, wherein each of the two lateral portions (10.2; 110.2) forms a hollow body with a cross-section decreasing towards the centre portion (10.1; 110.1) of the structural cross-member (10; 110).

7. Motor vehicle (2) according to Claim 2 or any one of Claims 3 to 6 falling within the dependency of Claim 2, **characterised in that** the at least two hooks (12.3; 112.3) are configured to extend under and in front of the central portion (10.1) of the structural cross-member (10; 110) to be inserted into openings formed in a lower face of said central portion (110.1).

8. Method for assembling a motor vehicle (2), comprising the following steps:
(a) assembly line of a front panel crossmember (12; 112);
(b) assembly line of a structural cross-member (10; 110) at the front of the front cross-member (12; 112); wherein the motor vehicle (2) is according to one of Claims 1 to 7; and step (b) comprises a temporary positioning of the structural cross-member (10.1; 110.1) on the temporary support means (12.3; 112.3) of the front cross-member (12; 112), and then a fastening of the structural cross-member (10; 110) to the two longitudinal profiles (4).
